Europäisches Patentamt

European Patent Office

Office européen des brevets

Publication number: **0 290 101**

**A1**

# EUROPEAN PATENT APPLICATION

Application number: 88200882.4

Date of filing: 04.05.88

Int. Cl.⁴ **A01D 34/66**

Priority: 07.05.87 NL 8701083

Date of publication of application:
09.11.88 Bulletin 88/45

Designated Contracting States:
DE FR GB NL

Applicant: **C. van der Lely N.V.**
**Weverskade 10 P.O. Box 26**
**NL-3155 ZG Maasland(NL)**

Inventor: **Van der Lely, Cornelis**
**7, Brüschenrain**
**Zug(CH)**

Representative: **Mulder, Herman et al**
**Octrooibureau Van der Lely N.V. Weverskade**
**10 P.O. Box 26**
**NL-3155 ZG Maasland(NL)**

## A mowing machine.

A mowing machine is provided with a mowing beam (1) consisting of supporting housings (10) for mower members (8) and intermediate sections (11) arranged therebetween. The supporting housings (10) and the intermediate sections (11) are interconnected by at least one coupling member (12). The mowing beam (1) is connected at one end to a coupling frame (2) by means of which the machine can be coupled to the lifting hitch (3) of a tractor and at the other end to a carrier frame (5) by means of a connecting member (27, 29). Furthermore, the carrier frame (5) is coupled to the coupling frame (2). The connecting member (12) is connected to the mowing beam (1) by at least one coupling member (12) or at least one of the coupling members (12) by means of which the various mowing beam sections (10, 11) are interconnected.

EP 0 290 101 A1

FIG. 2

## A MOWING MACHINE

The invention concerns a mowing machine comprising a mowing beam consisting of mower members that are rotatable about upwardly directed axes of rotation, which mowing beam at one end is connected to a coupling frame by means of which the mowing machine can be coupled to the lifting hitch of a tractor or a suchlike vehicle.

It is the object of the invention to improve a mowing machine of the above-defined type. According to the invention, this is achieved in that the mowing beam at its other end is coupled to a carrier frame by means of a torsion-rigid connecting member , the said carrier frame being located substantially at a higher level than the mowing beam. Thus there is obtained a mowing machine of a comparatively large working width and yet of a low weight. In spite of its large working width, the mowing machine, which can be coupled to the lifting hitch of a tractor or a suchlike vehicle, is highly manoeuvrable and easily operable. For example, the machine can be used to advantage in mowing ditch-sides or banks.

A favourable embodiment of the mowing machine according to the invention is obtained when the carrier frame includes a frame beam which is located substantially parallel to and above the mowing beam. A connecting member which is rigid against rotation is obtained in a simple manner when the connecting member includes a connecting beam, which beam extends in height and at its lower end is connected to a supporting member arranged to the mowing beam. The connection between the connecting member and the mowing beam can be obtained in a favourable manner when by at least part of the bolt connection, by means of which the supporting member is coupled to the mowing beam, there is connected a supporting shoe arranged at the lower side of the mowing beam near the supporting member. According to the invention, the connection between the connecting member and the mowing beam can be simplified further when the supporting member is connected, at least partly, to the mowing beam by at least one coupling member, by means of which the various mowing beam sections are interconnected. Using this construction, the means for interconnecting the various mowing beam sections are utilized in an advantageous manner.

The construction according to the invention is highly favourably applicable in a mowing beam consisting of elements that are interconnected by means of a coupling member. In case the mowing beam is heavily loaded, the forces acting thereon can be transferred in a favourable manner by the torsion-rigid connecting member between the carrier frame and the mowing beam to the carrier frame and be absorbed thereby at least in part so as to relieve the mowing beam construction. Thus there is obtained in a favourable manner a mowing machine wherein, according to the invention, the coupling member is a tensile member, by means of which the supporting beam sections for the mower members are pressed against each other, at least part of the supporting member being clamped against a supporting beam section by said tensile member.

In accordance with a further embodiment, the connecting beam of the connecting member is a tubular beam of circular shape, which beam extends obliquely upwardly. Hereby is achieved that the mown crop can move in a simple manner along the circular beam without sticking thereto. Owing to the fact that the beam extends obliquely forwardly and upwardly, the crop moving thereover towards the rear and hitting same will be able to move towards the lower end thereof. According to the invention, in this connection it is of advantage that the connecting beam extends in height at a short distance from the path of rotation of the mowing knives of at least one mower member present near same. In this manner, the crop moving downwardly along the connecting beam will be hit by the mowing knives of the said mower member, so that it cannot settle between the lower end of the connecting beam and the supporting member.

In accordance with a further embodiment of the mowing machine according to the invention, the carrier frame is rigidly connected to the mowing beam end which is coupled to the coupling frame. In this connection, the carrier frame may be connected in a favourable manner to a transmission box, which is connected to the one end of the mowing beam and to the coupling frame. According to the invention, in order to be able to bring the mowing machine into a transport position, a favourable arrangement of its various parts is obtained when near the connection between the carrier frame to the transmission box there is coupled a lifting device which is furthermore coupled to a part of the coupling frame, the arrangement being such that, by means of the lifting device, the mowing beam together with the carrier frame can be moved relative to the coupling frame and can be brought into the transport position during attachment to the tractor or a suchlike vehicle. The mowing machine according to the invention may have a working width of more than approximately 250 cms. A favourable embodiment thereof has a working width of 320 cms. In accordance with a further construction of the machine according to the invention. the mowing beam comprises seven mower members or more, each having a preferred working width of approximately 40 cms. In this connection, it is possible to obtain a favourable construction of the mowing beam, whereby the forces acting on the mower members can be absorbed to advantage by the supporting parts of the machine.

For a better understanding of the invention and to show how the same may be carried into effect, reference will now be made, by way of example, to the accompanying drawings, in which:

Figure 1 is a rear view of a mowing machine according to the invention, which machine is coupled to the lifting hitch of a tractor;

Figure 2 is, to an enlarged scale, a plan view of part of the mowing machine according to Figure 1, taken in the direction of the arrow II in Figure 1;

Figure 3 is a rear view of the part of the mowing machine as shown in Figure 2, taken in the direction of the arrow III in Figure 2;

Figure 4 is a side view of the mowing machine, taken in the direction of the arrow IV in Figure 3, and

Figure 5 is a plan view of part of the mowing machine, taken on the line V - V in Figure 3.

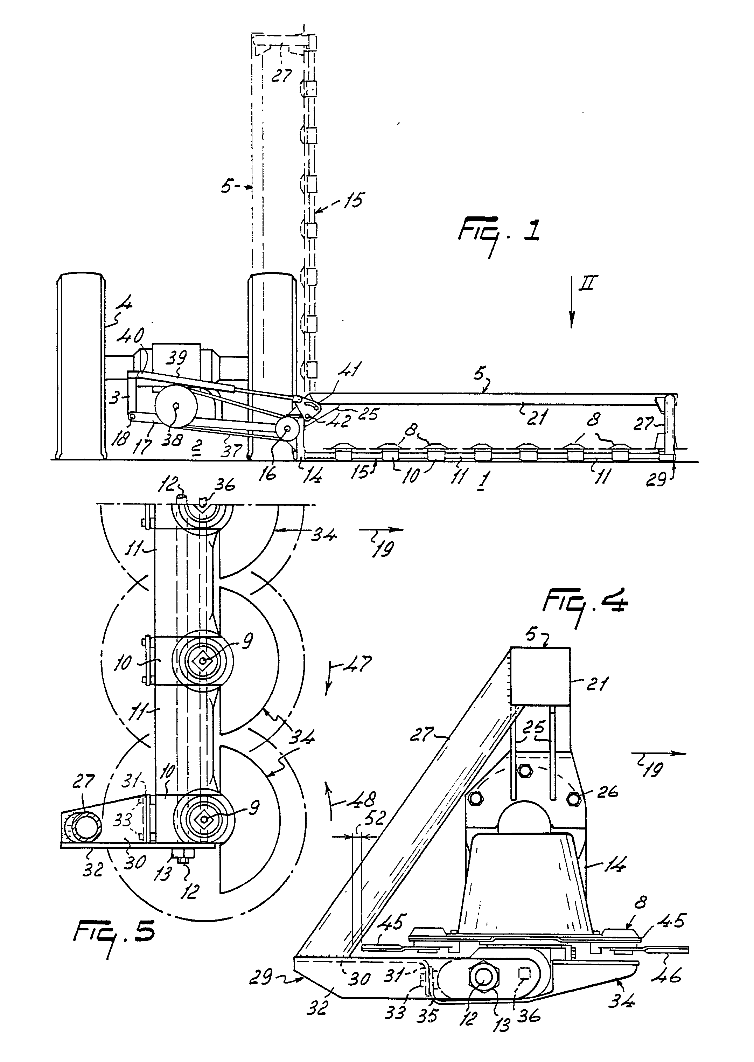

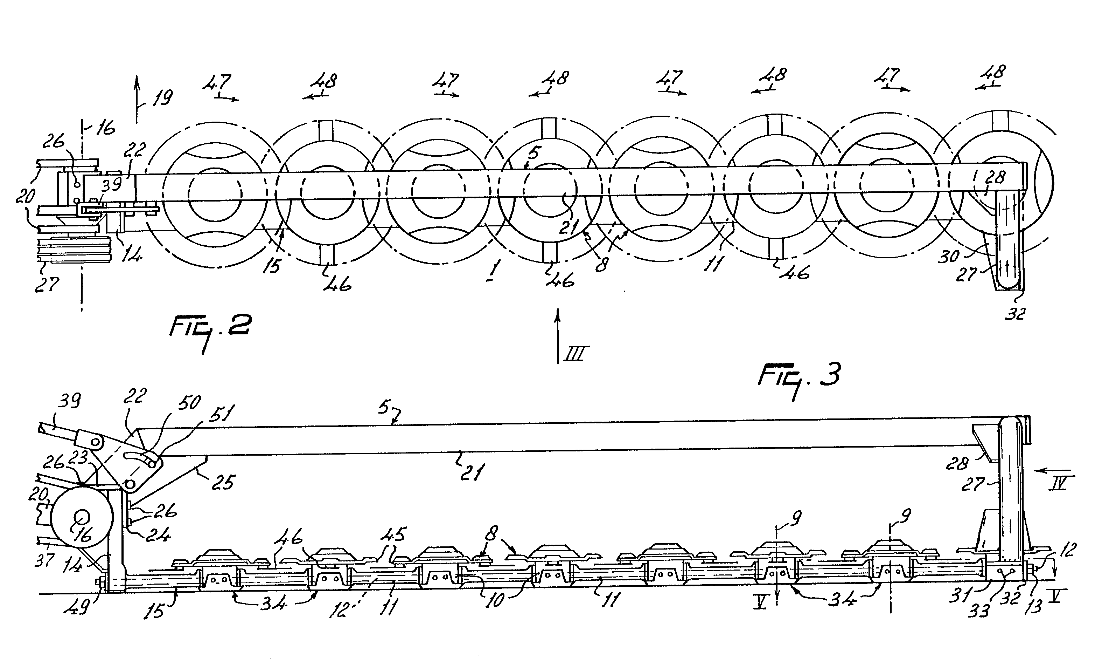

The embodiment of the mowing machine as shown in the drawings comprises a mowing beam 1 which is coupled to a coupling frame 2. The coupling frame 2 includes an attachment trestle 3, by means of which the mowing machine can be coupled to the lifting hitch of a tractor or a suchlike vehicle, as is shown in Figure 1. In addition, the mowing machine comprises a carrier frame 5 which is located at a higher level than the mowing beam 1 and, during operation, is rigidly connected thereto.

The mowing beam 1 comprises a plurality of mower members 8 located in a row. In this embodiment, the mowing beam 1 comprises eight mower members. The mowing beam 1 includes a supporting beam 15 which supports the mower members 8 and is composed of several parts. These parts consist of alternately adjoining supporting housings 10 and intermediate sections 11. The mower members are arranged at the supporting beam capable of rotation about vertically extending axes of rotation 9. The supporting housings 10 and the intermediate sections 11 together constitute a hollow supporting beam, through which extends a coupling member 12 which interconnects the supporting housings 10 and the intermediate sections 11. The supporting beam 15, as composed of the supporting housings and the intermediate sections, is coupled by means of the coupling member to the lower end of a vertically extending transmission box in the form of a gear box 14. The coupling member 12 includes a tube

or rod extending through the supporting beam 15 and having a screw-threaded end provided with a nut 13. The coupling member 12 extends through the lower end of the gear box 14 and is provided with a nut or bolt head 49. The nut 49 bears against the side of the gear box 14 facing away from the supporting beam 15. At the opposite end of the supporting beam 15, the nut 13 is arranged such that by means thereof the supporting housings 10 and the intermediate sections 11 can be drawn together against the lower side of the gear box 14 under tension.

Near its upper end, the gear box 14, and hence the mowing beam 1, is connected to the coupling frame 2 capable of pivotal movement about a pivot shaft 16. In this connection, the gear box 14 is connected pivotably to a fork-shaped portion 20 of a carrier arm 17 of the coupling frame 2. At its end facing away from the gear box 14, the carrier arm 17 is coupled pivotably by means of a pivot shaft 18 to the attachment trestle 3. The pivot shafts 16 and 18 are parallel to each other and extend in the direction of operative travel 19 of the mowing machine. During operation, the mowing beam 1 extends sidewards of the tractor 4 and perpendicularly to the direction of operative travel 19.

The carrier frame 5 comprises a frame beam 21 which extends parallel to the supporting beam 15 and to the mowing beam 1 and is located at a higher level than the latter. Seen in plan view, the frame beam 21 is located approximately above the centres of the mower members and above the supporting beam 15. The frame beam 21 is connected to a short frame beam 22 which extends obliquely downwardly relative thereto. The connection between the beams 21 and 22 is reinforced by means of supporting strips 25. The frame beam 22 and the supporting strips 25 are coupled rigidly to an angle support comprising two legs 23 and 24, by means of which the carrier frame 5 comprising the beams 21 and 22 is connected rigidly to the upper side of the gear box 14. Both the legs 23 and 24 are connected rigidly to the upper side of the gear box 14 by means of bolts 26. Near its end facing away from the gear box 14, the frame beam 21 is attached rigidly to a connecting beam 27. Preferably, the connecting beam 27 has a circular cross-section, as in this embodiment. From the rear side of the frame beam 21, the connecting beam 27 extends obliquely downwardly and rearwardly. The connection between the connecting beam 27 and the frame beam 21 is reinforced by a supporting plate 28. The lower end of the connecting beam 27 is connected rigidly to a supporting member 29.

The supporting member 29 comprises a supporting plate 30 which extends horizontally in the horizontal position of the machine, to which plate 30 is welded the lower end of the connecting beam 27. At its front side, the supporting plate 30 is provided with a downwardly bent attachment edge 31. A coupling strip 32 is rigidly attached against one sides of the supporting plate 30. By means of its flat sides. the coupling strip 32 extends vertically relative to the flat sides of the supporting plate 30. Relative to the direction of operative travel 19, the strip 32 extends forwardly to beyond the attachment edge 31 of the supporting plate 30. The coupling strip 32 is provided with an aperture, through which extends an end of the coupling member 12. By means of its part situated in front of the attachment edge 31, the coupling strip 32 is located with one side against a side of supporting housing 10 of the supporting beam 15. The nut 13 is arranged at the side of the coupling strip 32 facing away from the supporting beam 15. The coupling strip 32 is clamped fixedly between the nut 13 and the supporting beam 15. In addition, the supporting member 29 is attached rigidly to a supporting housing 10 constituting the end of the supporting beam 15 by means of bolts 33.

Below each of the supporting housings 10 there is arranged a supporting shoe 34. Each of said supporting shoes 34 has an upwardly extending edge 35 located behind the supporting beam 15, which edge 35 is attached to the relevant supporting housing 10 by means of bolts 33. The supporting shoe 34 located near the end of the supporting beam 15 is attached to the relevant supporting housing 10 by means of the same bolts 33 as by means of which the attachment edge 31 is attached thereto.

The supporting beam 15 is a hollow one, through which extends a drive shaft 36. By means of transmission members constituted by gearwheels arranged in the supporting housings 10, the drive shaft 36 is coupled therein to shafts carrying the mower members. By means of gearwheel transmissions in the gear box 14, the drive shaft 36 is coupled to a rope drive 37. The rope drive 37 is arranged to the coupling frame 2 and comprises a coupling shaft 38 which is bearing-supported in a bearing attached to the arm 17. In a manner not shown in further detail, the shaft 38 can be coupled by means of an intermediate shaft to the power take-off shaft of the tractor to which the machine is attached.

The coupling frame 2 includes a lifting mechanism 39 which, in this embodiment, is a hydraulic one. By means of a pivot shaft 40, the lifting mechanism 39 is coupled pivotably to the attachment trestle 3. The other end of the lifting mechanism 39 is coupled to a coupling segment 41 arranged pivotably about a shaft 42. The shaft 42 is rigidly attached to the carrier frame 5. In this situation, the pivot shaft 42 is arranged near the corner constituted by the legs 23 and 24.

Each of the mower members is provided with a carrier 45 which is rigidly attached to the shaft which is bearing-supported for rotational movement in the relevant supporting housing 10, the centre line of which shaft constitutes the axis of rotation 9 thereof. The carriers 45 are furthermore provided with mowing knives 46. Preferably, each mower member has two diametrically opposite mowing knives 46, as is shown in Figure 4.

During use, the machine is coupled to the lifting hitch of a tractor or a suchlike vehicle, as is shown in Figure 1. During operation, the mowing beam 1 extends transversely to the direction of operative travel 19 and is located at least substantially parallel to the soil. During operation, the mowing beam rests on the soil with at least part of the machine's weight. In order to be able to follow the unevennesses of the soil, the mowing beam 1 is arranged movably in height relative to the attachment trestle 3, and hence to the tractor 4, by means of the pivot shafts 16 and 18. The mower members are driven from the power take-off shaft of the tractor via the shaft 38, the rope drive 37 and the gearwheels arranged inside the gear box 14. The gearwheels inside the gear box 14 drive the drive shaft 36 which, in its turn, drives the mower members via the transmissions arranged in the supporting housings 10. In this embodiment, the mower members are driven in the directions as shown by the arrows 47 and 48. During operation, the drive of the mower members is such that adjacent mower members are rotated in opposite directions. If so desired, the direction of rotation of the mower members may also be chosen differently. During movement of the machine in the direction 19 and rotation of the mower members, the crop is cut off by the mowing knives 46 thereof. During continued movement of the mowing machine, the crop cut by the knives will be moved towards the rear over the mower members located above the supporting beam 15. In this embodiment, the mower members have a working width of approximately 40 cms, so that for eight mower members the total working width will be approximately 320 cms.

The supporting beam 15 is of such a construction that it can absorb strong forces. Preferably, the supporting housings 10 and the intermediate sections 11 are made of cast material, e.g. cast iron, and are pressed against each other under high tension by means of the coupling member 12. Due to the high tension under which the supporting housings and the intermediate sections are pressed against each other by the coupling member 12, the strength of the supporting beam is comparatively great. The tension under which the supporting housings 10 and the intermediate sections 11 are pressed against each other can be obtained by turning the nut 13 to a greater or lesser extent onto the threaded end of the coupling member 12. The nut or bolt head 49 located at the side of the gear box 14 facing away from the supporting beam 15 is preferably secured against rotation relative to the gear box 14. The carrier frame 5 located above the mowing beam 1 is rigidly connected thereto. The one end of the mowing beam 1 located near the coupling frame 2 is rigidly connected to the carrier frame 5 by means of bolts 26. The other end of the mowing beam 1 facing away from the gear box 14 is rigidly connected by means of the bolts 33 and the nut 13 to the end of the carrier frame 5 facing away from the gear box 14, which said carrier frame 5 comprises the frame beam 21, the connecting beam 27 and the supporting member 29. This connection is such that it is one which is rigid against rotation between the carrier frame 5 and the supporting beam 15 of the mowing beam 1. The connection of the frame beam 21 via the connecting beam 27 and the supporting member 29 is such that the connection 27, 29 is one which is rigid against rotation. The connection of the frame beam 21 via the short frame beam 22 and the angle support 23, 24 by means of the bolts 26, too, is one which is rigid against rotation. As a result, the forces acting on the mowing beam 1, e.g. in a direction opposite to that of operative travel 19, can also be absorbed by the carrier frame 5. Therefore, the frame beam 21 contributes to a considerable extent to the strength of the mowing beam 1 to absorb forces which, during operation, may act thereon and which, at least in part, can be transferred to the frame beam 21 via the supporting beam 15. This is of particular importance when the mowing beam 1 is comparatively long, as is the case in this embodiment. The reinforcement of the supporting beam 15 and the mowing beam 1, respectively, by means of the carrier frame 5 is of particular importance when the mowing beam 1 has a length exceeding 250 cms. Each mower member having a working width of approximately 40 cms, as in this embodiment, the use of the carrier frame 5 for reinforcing the mowing beam 1 will be of particular importance when the mowing machine comprises six mower members or more, as in this embodiment. Thus, using the construction according to the invention, it is possible to obtain a machine which is simple and comparatively light, yet strong. Owing to this design, the mowing machine can be employed to advantage to the lifting hitch of a tractor. In this connection, the mowing machine may have a large working width without its weight bearing on the tractor in an un desired manner. Also, being coupled to the tractor, the mowing machine may readily be located sidewards thereof. Equally, the mowing machine may readily be supported by the tractor on sloping fields. Thus, the mowing machine can be used to advantage in mowing ditch-sides and or banks. Since the mowing machine may readily be supported by the tractor, it can easily be manoeuvred during attachment thereto.

When not in operation, the mowing machine can be brought into a transport position, as is indicated by interrupted lines in Figure 1. For this purpose, the mowing beam 1 together with the carrier frame 5 can be pivoted relative to the coupling frame 2 about the pivot shaft 16 by means of the lifting mechanism 39. In this transport position, too, the carrier frame 5 will contribute to the reinforcement of the mowing machine portion which comprises the mowing beam 1 and is pivotable about the pivot shaft 16.

During operation, the assembly of mowing beam 1 and carrier frame 5 is capable of pivotal movement about the pivot shaft 16 in order to be adapted to the unevennesses of the soil. In order to allow this adaptation, the coupling segment 41 is provided with a slotted hole 50 adapted to co-operate with a stop 51, which is arranged rigidly to the supporting strips 25 of the carrier frame 5. The segment 41 is allowed to move about the shaft 42 within the limits defined by the length of the slotted hole 50. In this connection, the stop 51 together with the ends of the slotted hole 50 constitute the limits within which the segment 41 is pivotable about the shaft 42. The pivotal movement of the segment 41 is possible when the lifting mechanism 39 is not under hydraulic pressure and its plunger section can move freely within the cylindrical section.

A favourable construction of the carrier frame 5 is obtained when, as in this embodiment, the frame beam 21 is of a rectangular, preferably square, and hollow design. Then, the frame beam 21 contributes to a considerable extent to the reinforcement of the supporting beam 15 via the rigid connection consisting of the beam 27 and the supporting member 29. Preferably, like in this embodiment, the beam 27 is of a circular cross-section. The circular shape of the beam 27 is advantageous in that the crop moving rearwardly over the mower members will not catch thereon. Preferably, the beam 27 is arranged such that its lower end is located at only a short distance 52 from the path of rotation of the mowing knives 46 of the mower member 8 present near same, so that, in case crop should tend to settle in the corner between the lower end of the beam 27 and the supporting member 29 during operation, it will be cut loose by the said knives 46 owing to the said short distance 52. The frame beam 21 is arranged at such a distance above the mower members 8 that, even when a large quantity of crop is cut per unit of time and or per unit of length to be driven, this quantity can be moved over the mower members and under the frame beam 21 towards the rear relative to the mowing machine during its travel in the direction of operative travel 19.

The invention is not limited to the features described in the foregoing but also relates to all the details shown in the drawings, whether they have been described or not.

## Claims

1. A mowing machine comprising a mowing beam (1) consisting of mower members (8) that are rotatable about upwardly directed axes of rotation, which mowing beam (1) at one end is connected to a coupling frame (2) by means of which the machine can be coupled to the lifting hitch (3) of a tractor or a suchlike vehicle, characterized in that the mowing beam (1) at its other end is coupled to a carrier frame (5) by means of a connecting member (27, 29), which carrier frame (5) is located substantially at a higher level than the mowing beam (1), whilst the connecting member (27, 29) is connected to the mowing beam (1) by at least one coupling member (12), by means of which the various mowing beam sections (10, 11) are interconnected.

2. A mowing machine as claimed in claim 1, characterized in that the carrier frame (5) includes a frame beam (21) which is located substantially parallel to and above the mowing beam (1), and that the connecting member (27, 29) includes a connecting element (27), which element extends in height, at its upper end is connected to said frame beam (21), and at its lower end is connected to a supporting member (29) arranged to the mowing beam (1).

3. A mowing machine as claimed in claim 1 or 2, characterized in that the coupling member (12) is a tensile member, by means of which the supporting beam sections (10, 11) for the mower members (8) are pressed against each other, at least part of the connecting member (12) being clamped against a supporting team section (10, 11) by said tensile member (12).

4. A mowing machine as claimed in claim 2 or 3, characterized in that the mowing beam (1) comprises supporting housings (10) for rotatably supporting the mower members and intermediate sections (11) arranged therebetween, the supporting housings (10) and the intermediate sections (11) being interconnected by the coupling member (12) and the connecting member (12) being attached to a supporting housing (10) of the mowing beam (1).

5. A mowing machine as claimed in claim 1 or 2, characterized in that the connecting member (12) is connected to the mowing beam (1) by at least one of the coupling members (12), by means of which the various mowing beam sections (10, 11) are interconnected.

6. A mowing machine as claimed in claim 5, characterized in that the coupling members (12) are constituted by tensile members, by means of which the supporting beams sections (10, 11) for the mower members (8) are pressed against each other, at least part of the connecting member (27, 29) being clamped against a supporting beam section (10, 11) by at least one of said tensile members (12).

7. A mowing machine as claimed in claim 6, characterized in that at least one supporting housing (10) for rotatably supporting a mower member (8) and constituting part of the supporting beam (10, 11) and adjoining intermediate sections (11) also constituting part of the supporting beam (10, 11) are interconnected by at least one tensile member (12).

8. A mowing machine as claimed in claim 6, characterized in that at least two supporting housings (10) for rotatably supporting mower members (8) and constituting part of the supporting beam (10, 11) and, provided therebetween, an intermediate section (11) also constituting part of the supporting beam (10, 11) are interconnected by at least one tensile member (12).

9. A mowing machine as claimed in claim 2 or in any one of claims 3 to 8, insofar as appendant to claim 2, characterized in that the supporting member (29) comprises a plate-shaped portion (30) which extends horizontally in the horizontal position of the machine and, relative to the direction of operative travel of the machine, is located at the rear side of the mowing beam (1), the connecting element (27) being connected to the plate-shaped portion (30) behind a mower member (8).

10. A mowing machine as claimed in claim 9, characterized in that the connecting element (27) is a tubular element of circular shape, which element extends obliquely upwardly and forwardly.

11. A mowing machine as claimed in any one of the preceding claims, characterized in that the carrier frame (5) is connected rigidly to the mowing beam end which is coupled to the coupling frame (2).

12. A mowing machine as claimed in claim 11, characterized in that the carrier frame (5) is connected rigidly to a transmission box (14) which is connected to the one end of the mowing beam (1) and to the coupling frame (2).

13. A mowing machine as claimed in claim 12, characterized in that the carrier frame (5) is attached rigidly to the upper side of the transmission box (14) and the mowing beam (1) is attached rigidly to the lower side thereof, while the coupling frame (2) is connected pivotably to the upper side thereof.

14. A mowing machine as claimed in claim 12 or 13, characterized in that near the connection between the carrier frame (5) to the transmission box (14) there is coupled a lifting device (39) which is furthermore coupled to a part of the coupling frame (2), the arrangement being such that, by means of the lifting device (39), the mowing beam (1) together with the carrier frame (5) can be brought into a transport position relative to the coupling frame (2) during attachment to the tractor or a suchlike vehicle.

FIG. 1

FIG. 4

FIG. 5

FIG.2

FIG.3

0 290 101

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| P,X | EP-A-0 260 750 (VAN DER LELY) <br> * Page 3, line 38 - page 4, line 47; page 4, line 52 - page 5, line 25; figures 1,2,4; claims 3,5 * | 1-8,11-14 | A 01 D 34/66 |
| A | | 9,10 | |
| Y | EP-A-0 177 091 (VAN DER LELY) <br> * Page 4, lines 10-28; page 8, lines 1-15; figures 2-4,8,9 * | 1-8,11-12 | |
| A | | 9,10 | |
| Y | EP-A-0 165 624 (VAN DER LELY) <br> * Claim 1 * | 1-8,11-12 | |
| A | FR-A-2 316 858 (REBER) <br> * Page 1, lines 33-38; page 3, lines 33-38; figures 1,5 * | 1,2,9-14 | |
| A | EP-A-0 135 459 (KUHN) <br> * Page 2, line 27 - page 4, line 8 * | 1,2,11-13 | |
| | | | **TECHNICAL FIELDS SEARCHED (Int. Cl.4)** |
| A | GB-A-2 089 634 (KUHN) | | A 01 D |
| A | GB-A-1 515 270 (CLAYSON) | | |
| A | FR-A-2 584 889 (KUHN) | | |
| A | DE-A-1 936 054 (BUSATIS) | | |

The present search report has been drawn up for all claims

| Place of search | Date of completion of the search | Examiner |
|---|---|---|
| THE HAGUE | 20-07-1988 | DE LAMEILLIEURE D. |